# EUROPÄISCHE PATENTSCHRIFT

(11) **EP 1 669 574 B1**
(45) Veröffentlichungstag und Bekanntmachung des Hinweises auf die Patenterteilung: **04.04.2012**
(21) Anmeldenummer: 05109009.0
(22) Anmeldetag: 29.09.2005
(51) Int. Cl.: F02D 41/02, F01N 3/023, F01N 9/00

(54) **Verfahren und Vorrichtung zur Kontrolle der Regeneration eines Partikelfilters**
Method and device for controlling the regeneration of a particle filter
Dispositif et système de commande de la régénération d'un filtre à particules

(30) Priorität: 07.12.2004 DE 102004000065
(43) Veröffentlichungstag der Anmeldung: 14.06.2006
(73) Patentinhaber: Ford Global Technologies, LLC, Dearborn, MI 48126 (US)
(72) Erfinder: Dubkov, Alexei, 52064, Aachen (DE); Balenovic, Mario, 5645 KT, Eindhoven (NL); Harmsen, Jan, 6369 BX, Simpelveld (NL); Maertens, Steven, 31100, Toulouse (FR)
(74) Vertreter: Drömer, Hans-Carsten

(56) Entgegenhaltungen:
- EP-A- 1 333 165
- DE-A1- 10 252 732
- US-A1- 2004 031 262

## Beschreibung

Die Erfindung betrifft ein Verfahren und ein Regelungssystem zur Kontrolle der Regeneration des Partikelfilters einer Brennkraftmaschine, wobei die Regeneration durch die Verbrennung angesammelter Partikel erfolgt.

Partikelfilter werden in Kraftfahrzeugen verwendet, um schädliche (Ruß-) Partikel aus den Abgasen einer Brennkraftmaschine, insbesondere eines Dieselmotors, zu entfernen. Die Partikelfilter müssen dabei von Zeit zu Zeit von den angesammelten Partikeln wieder gereinigt werden, wobei diese Regeneration durch Verbrennen der Partikel im Filter erfolgt. Die Bedingungen für eine solche Verbrennung lassen sich durch die Sauerstoffkonzentration im Abgas und die Abgastemperatur einstellen. Falls die Temperaturen während einer Regeneration im Filter jedoch zu hoch werden, kann dies zu dessen Schädigung führen.

Aus der EP 1 333 165 A1, der DE 102 52 732 A1 und der US 2004/0031262 A1 ist jeweils ein Verfahren und ein Regelungssystem gemäß den Oberbegriffen der Ansprüche 1 und 8 bekannt, wobei der richtige Zeitpunkt und die Dauer einer Regeneration durch Modellierung der räumlichen Verteilung der Partikel im Filter ermittelt werden.

Aufgabe der Erfindung ist es, Schädigungen des Partikelfilters durch zu hohe Temperaturen während der Regeneration sicher und effizient zu verhindern.

Diese Aufgabe wird durch ein Verfahren mit den Merkmalen des Anspruchs 1 sowie durch ein Regelungssystem mit den Merkmalen des Anspruchs 8 gelöst. Vorteilhafte Ausgestaltungen sind in den Unteransprüchen enthalten.

Das erfindungsgemäße Verfahren dient der Kontrolle der Regeneration des Partikelfilters einer Brennkraftmaschine, insbesondere eines Dieselmotors, wobei die Regeneration durch Verbrennung von im Filter angesammelten Partikeln erfolgt. Das Verfahren ist dadurch gekennzeichnet, dass es eine ortsaufgelöste Modellierung des Verbrennungsprozesses im Partikelfilter umfasst. Insbesondere kann der Verbrennungsprozess räumlich eindimensional entlang der Strömungsrichtung der Abgase im Partikelfilter (d. h. entlang der Achse des Partikelfilters) modelliert werden. Eine derartige axial orientierte Simulation kann optional auch für zwei oder mehr parallel verlaufende Kanäle des Partikelfilters (z. B. einen Kanal in der Mitte und einen am Rand) durchgeführt werden, um so ein quasi zweidimensionales Bild zu erhalten. Bei entsprechendem Rechenaufwand ist selbstverständlich auch eine vollständige zweidimensionale oder sogar dreidimensionale Simulation des Verbrennungsprozesses möglich.

Durch die ortsaufgelöste Modellierung der Verbrennungsvorgänge im Partikelfilter kann eine hohe Sicherheit erreicht werden, da auch nur lokal stattfindende Überschreitungen von Grenztemperaturen detektiert werden können. Eine Schädigung des Partikelfilters kann dann durch präventive Maßnahmen verhindert werden. Darüber hinaus kann die Modellierung dazu eingesetzt werden, den Regenerationsprozess mit maximaler Geschwindigkeit ablaufen zu lassen, da aufgrund der vorhandenen Informationen über die Verhältnisse im Partikelfilter dicht bis an die zulässigen Temperaturgrenzen herangegangen werden kann.

Für die konkrete Ausgestaltung der Modellierung gibt es verschiedene Möglichkeiten. Vorzugsweise werden die Temperatur, der Temperaturgradient, die Partikelmenge und/oder die Verbrennungsrate innerhalb des Partikelfilters ortsaufgelöst modelliert. Die Temperatur und der Temperaturgradient sind dabei die Größen, welche für einen Schutz des Partikelfilters von besonderer Relevanz sind.

Der Modellierung müssen bestimmte Eingangsgrößen als Randbedingungen zur Verfügung gestellt werden. Vorzugsweise handelt es sich bei diesen Eingangsgrößen um die Sauerstoffkonzentration, die Temperatur und/oder den Massenfluss der in den Partikelfilter eintretenden Abgase. Die genannten Größen können dabei insbesondere auf aktuellen Messwerten beruhen, um die Verhältnisse in der Brennkraftmaschine möglichst real widerzuspiegeln.

Die aus der Modellierung erhältlichen Informationen können für verschiedene Zwecke verwendet werden. Vorzugsweise werden sie dazu genutzt, die Brennkraftmaschine so zu steuern, dass eine Sollvorgabe für die lokale Verbrennungsrate innerhalb des Partikelfilters eingehalten wird. Diese Sollvorgabe kann insbesondere in einer minimalen und maximalen lokalen Verbrennungsrate bestehen, die nicht unter- bzw. überschritten werden sollen. Durch eine Sollvorgabe für die Verbrennungsrate kann sichergestellt werden, dass die Temperaturverhältnisse im Partikelfilter in sicheren Grenzen bleiben und dass gleichzeitig die Regeneration mit einer hohen Geschwindigkeit abläuft.

Des weiteren kann die Brennkraftmaschine so gesteuert werden, dass obere Schwellwerte für die Temperatur und/oder den Temperaturgradienten innerhalb des Partikelfilters nicht überschritten werden, um eine Schädigung des Filters zu verhindern. Zusätzlich oder alternativ können auch untere Schwellwerte für die Temperatur und/oder den Temperaturgradienten innerhalb des Partikelfilters vorgegeben werden, die nicht unterschritten werden sollen, um den Regenerationsprozess mit hoher Geschwindigkeit und daher hoher Kraftstoffökonomie ablaufen zu lassen.

Die Beeinflussung der Verbrennungsvorgänge innerhalb des Partikelfilters kann insbesondere dadurch erfolgen, dass die Sauerstoffkonzentration, die Temperatur und/oder der Massenfluss des in den Partikelfiltern eintretenden Abgases in Abhängigkeit von der Modellierung kontrolliert werden. Dabei kommt der Sauerstoffkonzentration eine besonders hohe Bedeutung zu, da diese die Verbrennungsrate innerhalb des Filters bestimmt. Die genannten Größen können durch Vorgabe einer Vielzahl verschiedener Betriebsparameter der Brennkraftmaschine moduliert werden.

Gemäß einer Weiterbildung der Erfindung werden auch die Auswirkungen vorhergesagter Fahrweisen modelliert. So kann beispielsweise über ein Navigationssystem angezeigt werden, dass eine Bergfahrt oder eine Autobahnfahrt bevorsteht, bei welcher die Brennkraftmaschine voraussichtlich mit hoher Last betrieben wird. Die Auswirkungen der dabei entstehenden erhöhten Abgastemperaturen können in diesem Falle mit der Modellierung vorhergesagt werden.

Die Erfindung betrifft ferner ein Regelungssystem für die Kontrolle der Regeneration des Partikelfilters einer Brennkraftmaschine durch Verbrennung angesammelter Partikel, wobei das Regelungssystem eine Modelleinheit zur ortsaufgelösten Modellierung des Verbrennungsprozesses im Partikelfilter enthält. Das Regelungssystem mit der Modelleinheit kann insbesondere in Form eines Mikrocomputers mit entsprechender Hard- und Software realisiert sein, wobei in diesem Falle die Modelleinheit ein diskretisiertes, digitalisiertes Modell der Verbrennungsprozesse enthält. Das Regelungssystem ist ferner vorzugsweise dahingehend ausgebildet, ein Verfahren der oben beschriebenen Art auszuführen. Hinsichtlich der Einzelheiten, Vorteile und Weiterbildungen des Regelungssystems wird daher auf die obige Beschreibung verwiesen.

Zu dem Regelungssystem kann optional eine Sauerstoffsonde gehören, die im Abgasweg der Brennkraftmaschine vor dem Partikelfilter angeordnet ist. Mit einer derartigen Sonde kann dann die Sauerstoffkonzentration im Abgas gemessen werden, welche eine wichtige Eingangsgröße für die Modelleinheit darstellt. Derartige Sauerstoffsonden sind als sog. Lambda-Sonden zur Regelung der Abgasnachbehandlungseinrichtungen häufig ohnehin in einem Kraftfahrzeug vorhanden.

Die Erfindung wird nachfolgend anhand der Zeichnungen beispielhaft näher erläutert. Es zeigen:
- Figur 1: ein Blockschema eines erfindungsgemäßen Regelungssystems mit einer Brennkraftmaschine und einem Partikelfilter;
- Figur 2: die maximale Ruß-Verbrennungsrate innerhalb eines Partikelfilters bei einer herkömmlichen und einer erfindungsgemäßen Regeneration eines Partikelfilters sowie den für die erfindungsgemäße Regeneration gesetzten Schwellwert;
- Figur 3: die maximalen Temperaturen innerhalb eines Partikelfilters bei einer herkömmlichen und einer erfindungsgemäßen Regeneration, und
- Figur 4: den Verlauf der gesamten Ruß-Konversion bei einer herkömmlichen und einer erfindungsgemäßen Regeneration.

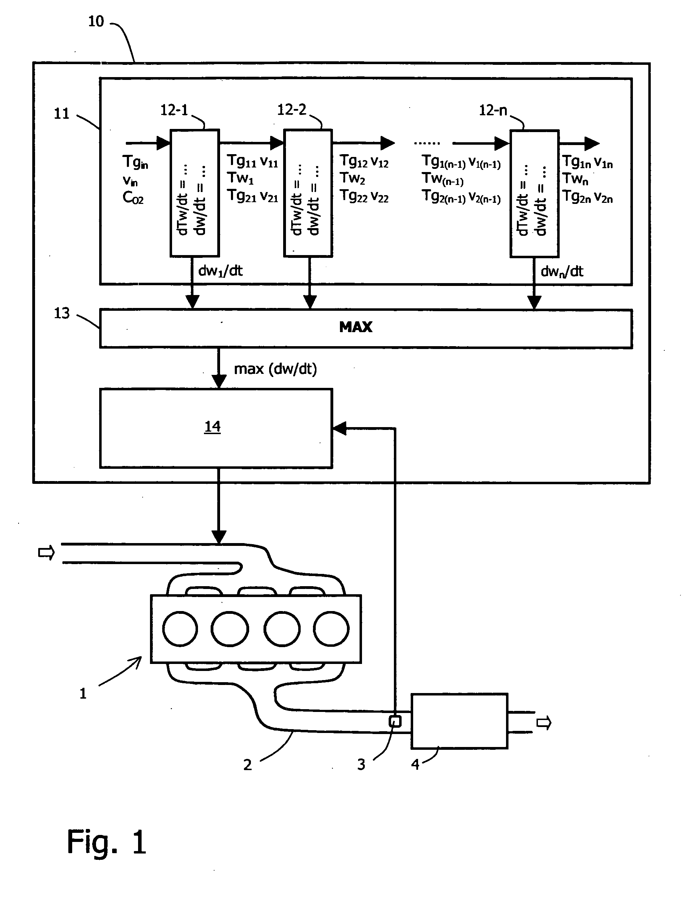

In Figur 1 ist eine Brennkraftmaschine 1 dargestellt, in deren Abgasweg 2 ein Diesel-Partikelfilter 4 angeordnet ist. Die im Partikelfilter 4 aus dem Abgas der Brennkraftmaschine 1 angesammelten Rußpartikel müssen von Zeit zu Zeit durch eine Regeneration des Filters 4 entfernt werden. Bei einer solchen Regeneration wird die Temperatur des Abgases so weit erhöht, dass die Oxidation des im Filter 4 gespeicherten Rußes möglich wird. In bestimmten Situationen kann die Regeneration jedoch zu sehr hohen Temperaturen oder Temperaturgradienten im Partikelfilter 4 führen, welche dann das Substrat und - im Falle eines katalytischen Partikelfilters - auch die katalytische Beschichtung des Filters beschädigen können.

Um die vorstehend genannten Probleme zu vermeiden, wird der Einsatz eines Regelungssystem 10 vorgeschlagen, welches beispielsweise in Form eines Mikroprozessors mit entsprechender Software realisiert sein kann. Das Regelungssystem 10 enthält eine Modelleinheit 11, in welcher die Verbrennungsprozesse innerhalb des Partikelfilters 4 ortsaufgelöst sowie zeit- und ortsdiskret simuliert werden. Die in Figur 1 dargestellten einzelnen Zellen 12-1, 12-2, ... 12-n der Modelleinheit 11 repräsentieren dabei aufeinander folgende diskrete Kompartimente entlang der Erstreckung des Partikelfilters 4.

Die erste Zelle 12-1 am stromaufwärtigen Ende des (virtuellen) Partikelfilters erhält als Eingabe die Temperatur Tgᵢₙ, den Massenfluss vᵢₙ, sowie die Sauerstoffkonzentration C_{O2} des Abgases, welches in den Partikelfilter eintritt. Die einzelnen Zellen weisen jeweils die Verbrennungsrate bzw. Änderungsrate der Partikelbeladung, dwᵢ/dt, sowie die Temperatur Tw der Kanalwände bzw. deren Änderung als Zustandsgröße auf. Weiterhin bedeutet in Figur 1 für jede Zelle x: Tg₁ₓ die Einlasskanaltemperatur, Tg₂ₓ die Auslasskanaltemperatur, v₁ₓ die Gasgeschwindigkeit im Einlasskanal und v₂ₓ die Gasgeschwindigkeit im Auslasskanal. Die Dynamik dieser Größen wird dabei durch dem Fachmann geläufige Relationen modelliert. Beispielsweise ist die Änderungsrate dw/dt der Partikelbeladung von der Sauerstoffkonzentration im Abgas sowie der Temperatur der Partikelbeladung abhängig. Die Oxidation von Rußpartikeln führt wiederum zur Produktion von Wärme und damit zu einer Temperaturerhöhung des Abgases und der Partikelbeladung.

Die einzelnen in den Zellen ermittelten Partikel-Verbrennungsraten dwᵢ/dt werden einem Block 13 zugeführt, in welchem das Maximum dieser Werte bestimmt wird. Die so ermittelte maximale Verbrennungsrate innerhalb des Partikelfilters, max(dw/dt), wird wiederum einer Regelungseinheit 14 zugeführt, welche steuernden Einfluss auf die Brennkraftmaschine 1 ausübt. Durch die Modelleinheit 11 hat die Regelungseinheit 14 dabei Informationen über die Partikelbeladung, Verbrennungsrate und Temperatur entlang der Filterachse, welche eine sichere und gleichzeitig schnelle Regeneration ermöglichen. Durch die Vorhersage der lokalen Verbrennungsrate kann nämlich regelnd eingegriffen werden, wenn eine zu starke lokale Temperaturerhöhung droht, die den Filter oder seine Beschichtung beschädigen würde. Umgekehrt kann die Temperatur durch Beachtung des Modells 11 ohne Einhaltung eines übergroßen Sicherheitsabstandes in der Nähe zulässiger Werte gehalten werden, wodurch eine hohe Verbrennungsrate und damit ein geringer Kraftstoffverbrauch für die Regeneration erreicht werden.

Die Partikel-Verbrennungsrate im Partikelfilter 4 kann insbesondere über die Konzentrationen von Sauerstoff und NOx, die Temperatur und den Massenfluss des Abgases, welches in den Partikelfilter 4 eintritt, beeinflusst werden. Die genannten Größen können ihrerseits über verschiedene Betriebsparameter der Brennkraftmaschine 1 von der Regeleinheit 14 kontrolliert werden, beispielsweise über eine Nachinjektion von Kraftstoff in den Zylinder oder in den Abgaskrümmer, über eine Einlassdrosselung, über ein Abgasrückführungsventil (bzw. eine AGR-drossel), über eine Bypasseinrichtung, über die VGT-Position und dergleichen. Im Allgemeinen können diese Größen dabei nicht unabhängig voneinander kontrolliert werden, d.h. eine Änderung der Sauerstoffkonzentration im Abgas kann beispielsweise nicht ohne Beeinflussung des Massenflusses und/oder der Temperatur erreicht werden. Die Verbrennung des Rußes ist gegenüber der Sauerstoffkonzentration sensibler als gegenüber dem Massenfluss des Abgases, da Erstere direkt die Verbrennungsreaktionen beeinflusst, während der Massenfluss durch einen Kühleffekt den Temperaturanstieg im Filter betrifft.

Die Sauerstoffkonzentration kann von der Regeleinheit 14 vorzugsweise über eine Lambda-Sonde 3 im Abgasweg 2 vor dem Partikelfilter 4 in einer rückgekoppelten Schleife überwacht werden. Da die dynamische Antwort des Filters auf Temperaturänderungen langsamer verläuft, ist die Temperaturregelung im Allgemeinen langsamer als die Regelung über die Sauerstoffkonzentration.

Das Regelungssystem 10 kann auch als Ergänzung von existierenden Regenerationsstrategien verwendet werden, wobei es eine zu hohe lokale Wärmefreisetzung unter kritischen Bedingungen und damit ein Versagen des Filters verhindert. In einem solchen Falle beobachtet das Regelungssystem 10 den Verlauf des Regenerationsprozesses und ergreift die oben erläuterten Maßnahmen, wenn sich die maximale Partikelverbrennungsrate innerhalb des Filters einer vorgegebenen oberen Schwelle nähert, um die Verbrennungsrate innerhalb sicherer Grenzen zu halten. Da das Modell 11 und der Regler 14 ständig arbeiten, werden nicht nur aktive Regenerationen, sondern auch unbeabsichtigte, eventuell schädigende Regenerationsprozesse kontrolliert und innerhalb sicherer Grenzen gehalten.

Gemäß einer Weiterbildung kann das Modell 11 auch das zukünftige Systemverhalten für ein angenommenes zukünftiges Fahrmuster vorhersagen. Mit dieser Information können dann höher entwickeltere Regelungsmaßnahmen ergriffen werden, so dass der Regler beispielsweise zu hohe Reaktionsraten im Voraus vorhersehen und entsprechend hierauf reagieren kann.

Der Partikelfilter 4 kann sowohl unbeschichtet als auch katalytisch beschichtet sein. Bei unbeschichteten Filtern hilft das Regelungssystem, ein Schmelzen oder Brechen aufgrund zu hoher Temperaturen und Temperaturgradienten zu verhindern, während das System bei beschichteten Filtern zusätzlich eine thermische Deaktivierung des Katalysators verhindert, die typischerweise bei sehr viel geringeren Temperaturen als den für das Substrat gefährlichen auftritt.

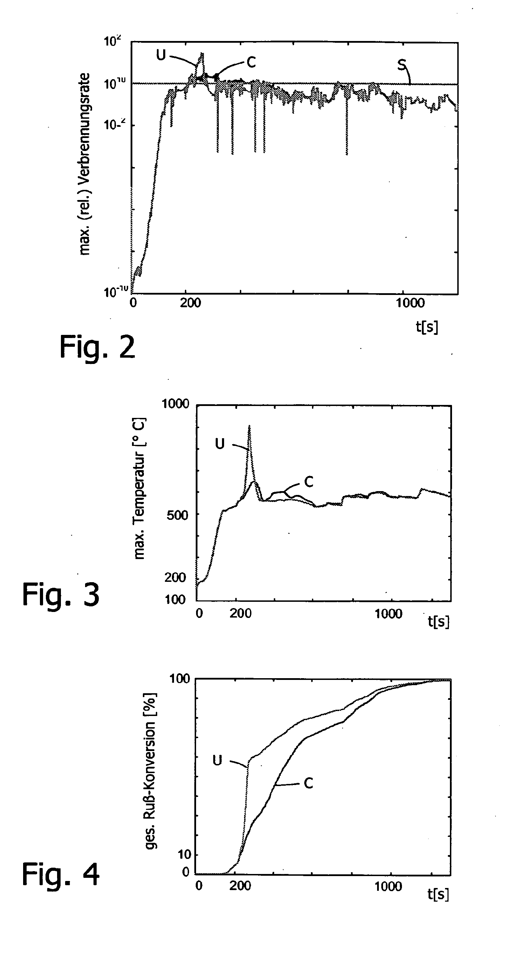

In Figur 2 sind für eine (simulierte) Stadtfahrt die Verläufe der herkömmlichen (unkontrollierten) Verbrennungsrate U sowie der mit dem oben genannten Verfahren kontrollierten Verbrennungsrate C über der Zeit t (horizontale Achse) aufgetragen. Die Linie S zeigt den Schwellwert an, bei welchem das erfindungsgemäße Verfahren (Kurve C) Maßnahmen gegen eine weitere Erhöhung der Verbrennungsrate ergriffen hat. Das Regelungsverfahren hält die Verbrennungsrate innerhalb sicherer Grenzen.

Aus der zu den vorstehend erläuterten Messungen gehörigen Kurve des Temperaturverlaufes in Figur 3 ist erkennbar, dass schädigende Temperaturspitzen bei dem erfindungsgemäßen Verfahren (Kurve C) vermieden werden.

Weiterhin zeigt Figur 4, dass die gesamte Partikelkonversion bei dem erfindungsgemäßen Verfahren (Kurve C) zwar anfangs langsamer erfolgt als im unkontrollierten Fall (Kurve U), dass dieser Unterschied später aber wett gemacht wird und die Regenerationen etwa gleichzeitig abgeschlossen sind.

In Abwandlung des Verfahrens könnte auch ein unterer Schwellwert festgesetzt werden, bei dessen Unterschreitung Maßnahmen zur Erhöhung der Verbrennungsrate ergriffen werden. Auf diese Weise könnte unter Einhaltung der Sicherheitsgrenzen eine maximale Verbrennungsrate im Partikelfilter erzielt werden, was wiederum dem Kraftstoffverbrauch zugute kommt.

## Patentansprüche

1. Verfahren zur Kontrolle der Regeneration des Partikelfilters (4) einer Brennkraftmaschine (1) durch Verbrennung angesammelter Partikel,
**dadurch gekennzeichnet, dass**
der Verbrennungsprozess ortsaufgelöst modelliert wird und die aus der Modellierung erhaltenen Informationen dazu genutzt werden, die Brennkraftmaschine (1) so zu steuern, dass eine Sollvorgabe für die lokale Verbrennungsrate innerhalb des Partikelfilters (4) eingehalten wird.

2. Verfahren nach Anspruch 1,
**dadurch gekennzeichnet, dass**
der Verbrennungsprozess eindimensional entlang mindestens eines Kanals des Partikelfilters (4) modelliert wird.

3. Verfahren nach Anspruch 1 oder 2,
**dadurch gekennzeichnet, dass**
die Temperatur, der Temperaturgradient, die Partikelmenge und/oder die Verbrennungsrate innerhalb des Partikelfilters (4) modelliert werden.

4. Verfahren nach mindestens einem der Ansprüche 1 bis 3,
**dadurch gekennzeichnet, dass**
die Modellierung als Eingangsgrößen die Sauerstoffkonzentration, die Temperatur und/oder den Massenfluss der in den Partikelfilter (4) eintretenden Abgase verwendet.

5. Verfahren nach mindestens einem der Ansprüche 1 bis 4,
**dadurch gekennzeichnet, dass**
die Brennkraftmaschine (1) so gesteuert wird, dass Schwellwerte (S) für die Temperatur und/oder den Temperaturgradienten innerhalb des Partikelfilters (4) nicht überschritten und/oder unterschritten werden.

6. Verfahren nach mindestens einem der Ansprüche 1 bis 5,
**dadurch gekennzeichnet, dass**
die Sauerstoffkonzentration und/oder der Massenfluss des in den Partikelfilter (4) eintretenden Abgases in Abhängigkeit von der Modellierung des Verbrennungsprozesses kontrolliert werden.

7. Verfahren nach mindestens einem der Ansprüche 1 bis 6,
**dadurch gekennzeichnet, dass**
die Auswirkungen vorhergesagter Fahrweisen modelliert werden.

8. Regelungssystem (10) zur Kontrolle der Regeneration des Partikelfilters (4)
einer Brennkraftmaschine (1) durch Verbrennung angesammelter Partikel, **gekennzeichnet durch**
eine Modelleinheit (11) zur ortsaufgelösten Modellierung des Verbrennungsprozesses im Partikelfilter (4) und eine Regelungseinheit (14) zur Steuerung der Brennkraftmaschine (1) unter Nutzung der aus der Modellierung erhaltenen Informationen derart, dass eine Sollvorgabe für die lokale Verbrennungsrate innerhalb des Partikelfilters (4) eingehalten wird.

9. Regelungssystem nach Anspruch 8,
**dadurch gekennzeichnet, dass**
dieses dahingehend ausgebildet ist, ein Verfahren nach mindestens einem der Ansprüche 2 bis 8 auszuführen.

## Claims

1. Method for controlling the regeneration of the particulate filter (4) of an internal combustion engine (1) by combustion of accumulated particulates, **characterized in that** the combustion process is modeled in spatially resolved fashion and the information obtained from the modeling is used to control the internal combustion engine (1) in such a way as to maintain a set stipulation for the local combustion rate within the particulate filter (4).

2. Method according to Claim 1, **characterized in that** the combustion process is modeled one-dimensionally along at least one passage through the particulate filter (4).

3. Method according to Claim 1 or 2, **characterized in that** the temperature, the temperature gradient, the quantity of particulates and/or the combustion rate within the particulate filter (4) are modeled.

4. Method according to at least one of Claims 1 to 3, **characterized in that** the modeling uses the oxygen concentration, the temperature and/or the mass flow of the exhaust gases entering the particulate filter (4) as input variables.

5. Method according to at least one of Claims 1 to 4, **characterized in that** the internal combustion engine (1) is controlled in such a way that threshold values (S) for the temperature and/or the temperature gradient within the particulate filter (4) are not exceeded and/or undershot.

6. Method according to at least one of Claims 1 to 5, **characterized in that** the oxygen concentration and/or the mass flow of the exhaust gas entering the particulate filter (4) are controlled as a function of the modeling of the combustion process.

7. Method according to at least one of Claims 1 to 6, **characterized in that** the effects of predicted driving styles are modeled.

8. Control system (10) for controlling the regeneration of the particulate filter (4) of an internal combustion engine (1) by combustion of accumulated particulates, **characterized by** a modeling unit (11) for the spatially resolved modeling of the combustion process in the particulate filter (4) and a control unit (14) for controlling the internal combustion engine (1) using the information obtained from the modeling in such a way as to maintain a set stipulation for the local combustion rate within the particulate filter (4).

9. Control system according to Claim 8, which is designed in such a way as to carry out the method according to at least one of Claims 2 to 8.

## Revendications

1. Procédé de contrôle de la régénération du filtre à particules (4) d'un moteur à combustion interne (1) par combustion des particules recueillies,
**caractérisé en ce que**
le processus de combustion est modélisé à résolution spatiale et les informations fournies par la modélisation sont utilisées pour commander le moteur à combustion interne (1) de manière à respecter une prescription de consigne du taux local de combustion à l'intérieur du filtre à particules (4).

2. Procédé selon la revendication 1, **caractérisé en ce que** le processus de combustion est modélisé en une dimension le long d'au moins un canal du filtre à particules (4).

3. Procédé selon les revendications 1 ou 2, **caractérisé en ce que** la température, le gradient de température, la quantité de particules et/ou le taux de combustion à l'intérieur du filtre à particules (4) sont modélisés.

4. Procédé selon au moins l'une des revendications 1 à 3, **caractérisé en ce que** la modélisation utilise comme grandeurs d'entrée la concentration en oxygène, la température et/ou le débit massique des gaz d'échappement qui pénètrent dans le filtre à particules (4).

5. Procédé selon au moins l'une des revendications 1 à 4, **caractérisé en ce que** le moteur à combustion interne (1) est commandé de manière à ne pas dépasser vers le haut et/ou vers le bas des valeurs de seuil (S) de la température et/ou du gradient de température à l'intérieur du filtre à particules (4).

6. Procédé selon au moins l'une des revendications 1 à 5, **caractérisé en ce que** la concentration en oxygène et/ou le débit massique des gaz d'échappement qui pénètrent dans le filtre à particules (4) sont contrôlés en fonction de la modélisation du processus de combustion.

7. Procédé selon au moins l'une des revendications 1 à 6, **caractérisé en ce que** les effets de mode de conduite prédits sont modélisés.

8. Système de régulation (10) destiné à contrôler la régénération du filtre à particules (4) d'un moteur à combustion interne (1) par combustion des particules recueillies,
**caractérisé par**
une unité de modélisation (11) qui modélise à résolution spatiale le processus de combustion dans le filtre à particules (4) et une unité de régulation (14) qui commande le moteur à combustion interne (1) en utilisant les informations fournies par la modélisation de manière à respecter une prescription de consigne du taux local de combustion à l'intérieur du filtre à particules (4).

9. Système de régulation selon la revendication 8, **caractérisé en ce qu'**il est configuré en vue de mettre en oeuvre un procédé selon au moins l'une des revendications 2 à 8.
